# EUROPEAN PATENT SPECIFICATION

(11) **EP 2 159 078 B1**
(45) Date of publication and mention of the grant of the patent: **23.05.2012**
(21) Application number: 09168513.1
(22) Date of filing: 24.08.2009
(51) Int. Cl.: B60C 9/04

(54) **Modular ply tire with dissimilar materials**
Modularer Lagenreifen aus unterschiedlichen Materialien
Pneu à pli modulaire avec des matériaux différents

(30) Priority: 29.08.2008 US 201090
(43) Date of publication of application: 03.03.2010
(73) Proprietor: The Goodyear Tire & Rubber Company, Akron, OH 44316-0001 (US)
(72) Inventor: Neubauer, Robert Anthony, Medina, OH 44256 (US); Trares, Keith Carl, Akron, OH 44319 (US); Hubbell, Joseph Kevin, Akron, OH 44313 (US); Zhang, Ping, Hudson, OH 44236 (US)
(74) Representative: Kutsch, Bernd

(56) References cited:
- EP-A- 0 662 396
- EP-A- 0 839 675
- EP-A- 1 057 659
- EP-A- 1 433 590
- EP-A- 1 837 206
- EP-A- 1 916 123
- EP-A- 2 052 879
- JP-A- 2 249 706

## Description

### Background of the Invention

### A. Field of Invention

This invention pertains to a tire carcass with a crown portion and sidewalls made of dissimilar materials and to a tire with such a carcass.

In a preferred aspect of the invention, the invention relates to monopoly tires.

### B. Description of the Related Art

It is known in the art to provide monoply and two-ply tires for vehicles.

US-B- 7,017,635 discloses a pneumatic tire for trucks having reduced weight and less material usage.

The present invention preferably utilizes an outside-in radial ply construction, which aids to torque the tire bead into the rim of the wheel to which it is mounted and allows the rim to provide greater support for the tire. The size of the bead may be reduced, permitting a reduction in the amount of rubber and reinforcement around and above the bead.

US-B- 6,913,052 discloses a tire construction and a method of building a tire which comprises the steps of cylindrically applying a pair of radial cord reinforced sidewall plies, fixing the axial spacing between the bead cores; applying a crown ply, turning up each sidewall ply to overlap lateral edges of the crown ply; moving the carcass assembly axially inwardly while shaping the carcass assembly toroidially to form ply turnups axially inwardly of the bead cores.

US-B- 6,536,495 discloses a two-ply radial runflat tire having a belt structure, a ply structure, two inextensible beads and two wedge-insert reinforced sidewalls. The outer ply is reinforced by high-modulus, light-weight aramid. The aramid reinforcement material of the outer ply is clamped around the beads. The outer ply is prestressed in tension during manufacture of the tire. The resultant tire is light in weight and resists upward buckling of the tread during runflat operation.

US-B- 6,527,025 discloses a pneumatic tire comprising a carcass ply extending between bead portions and including a topping rubber layer, the topping rubber layer facing the inside of the tire and made of a butyl rubber compound containing at least 10 parts by weight of butyl rubber or butyl rubber derivative; and a belt disposed radially outside the carcass in the tread portion, the belt comprising at least one ply of monofilament cords laid at an angle of from 10 to 40 degrees with respect to the circumferential direction of the tire, and each of the monofilament cord consisting of a single filament.

US-B- 6,263,935 discloses a radial ply pneumatic tire having a carcass with a bead portion, a carcass reinforcing structure, and a bead filler. The carcass reinforcing structure has at least two structures with cords which extend to each bead. In a preferred embodiment of the invention, the tire carcass includes elastomeric first and second fillers, the first filler being located between the first ply structure and the innerliner of the tire, and the second filler being located between the first and second ply structures. The fillers stiffen the sidewalls to permit the tire to be driven while uninflated. The tire further includes an aramid overlay radially outwardly of the reinforcing belt.

Document EP-A-1 433 590 discloses the features of the preamble of claim 1.

### Summary of the Invention

The invention relates to a tire carcass according to claim 1 and to a tire according to claim 15.

Dependent claims refer to preferred embodiments of the invention.

In one aspect of the present invention, a tire carcass is disclosed comprising a first radial ply;a first sidewall; a second sidewall; a carcass crown portion, the carcass crown portion having a first edge and a second edge; and, a non-continuous second radial ply, the second radial ply having a right side extending from approximately the first edge of the carcass crown portion, and extending at least to the first bead core and a left side extending from approximately the second edge of the carcass crown portion, and extending at least to the second bead core, wherein at least one of the sidewalls and the carcass crown portion are made of dissimilar material.

In a further aspect of the present invention, the tire carcass further comprises a non-continuous third radial ply, the third radial ply having a right side extending from approximately the first edge of the carcass crown portion, and extending at least to the first bead core, and a left side extending from approximately the second edge of the carcass crown portion, and extending at least to the second bead core, the third radial ply overlaying the second radial ply.

In one aspect of the present invention the material in the crown portion has a lower material strength than at least one of the sidewalls, wherein the material strength is determined by at least one of the following group comprising: Shore A hardness, compounding, cord diameter, tensile strength, and twists per inch.

In yet another aspect of the present invention the carcass has a center line perpendicular to the bead core, wherein the right side of the second radial ply is at an angle of at least approximately 75° with respect to the center line, and the left side of the second radial ply is at an angle of at least approximately -75° with respect to the center line.

In yet another aspect of the present invention the right side of the second radial ply is at an angle of at least approximately 105° with respect to the center line, and the left side of the second radial ply is at an angle of at least approximately -105° with respect to the center line.

In yet another aspect of the present invention the right side of the second radial ply is at an angle of between at least approximately 75° and approximately 105° with respect to the center line, and the left side of the second radial ply is at an angle of between at least approximately -75° and approximately -105° with respect to the center line.

In yet another aspect of the present invention the material in the crown portion has a lower material strength than at least one of the sidewalls, wherein the material strength is determined by at least one of the following group comprising: Shore A hardness, compounding, cord diameter, tensile strength, and twists per inch.

In yet another aspect of the present invention the material for at least one of the sidewalls has an epi between 24 and 35 and the material in the crown portion has an epi between 16 and 24.

In yet another aspect of the present invention the first radial ply is at a greater angle with respect to the center line than the angle of the left and right sides of the second and third plies.

In yet another aspect of the present invention the right side of the second radial ply is at an angle of at least approximately 105° with respect to the center line, the left side of the second radial ply is at an angle of at least approximately - 105° with respect to the center line, the right side of the third radial ply is at an angle of at least approximately 105° with respect to the center line, and the left side of the third radial ply is at an angle of at least approximately -105° with respect to the center line.

In yet another aspect of the present invention the right side of the second radial ply is at an angle of between at least approximately 75° and approximately 105° with respect to the center line, the left side of the second radial ply is at an angle of between at least approximately -75° and approximately -105° with respect to the center line, the right side of the third radial ply is at an angle of between at least approximately -75° and approximately -105° with respect to the center line, and the left side of the third radial ply is at an angle of between at least approximately -75° and approximately -105° with respect to the center line.

In one aspect of the present invention, the right side of the second radial ply is at an angle of at least 90° with respect to the center line, and the left side of the second radial ply is at an angle of at least -90° with respect to the center line.

According to another embodiment of this invention, the right side of the second radial ply is at an angle of at least 90° with respect to the center line, the left side of the second radial ply is at an angle of at least -90° with respect to the center line, the right side of the third radial ply is at an angle of at least 90° with respect to the center line, and the left side of the third radial ply is at an angle of at least -90° with respect to the center line.

According to another embodiment of this invention, the right and left sides of the second radial ply have a width that is approximately half of a width of the first radial ply.

According to another embodiment of this invention, the right and left sides of the second and third radial plies have a width that is approximately half of a width of the first radial ply.

In yet another aspect of the present invention the material in the crown portion has the same or higher material strength than at least one of the sidewalls, wherein the material strength is determined by at least one of the following group comprising: Shore A hardness, compounding, cord diameter, tensile strength, and twists per inch.

In yet another aspect of the present invention the material in the crown portion has the same or higher material strength than at least one of the sidewalls, wherein the material strength is determined by at least one of the following group comprising: Shore A hardness, compounding, cord diameter, tensile strength, and twists per inch.

In yet another aspect of the present invention the right and left sides of the second radial ply have a combined width that is approximately half of a width of the first radial ply.

In yet another aspect of the present invention the right and left sides of the second and third radial plies have a combined width that is approximately half of a width of the first radial ply.

In yet another aspect of the present invention, a tire carcass is disclosed, the carcass comprising a first radial ply; sidewalls; a carcass crown portion, the carcass crown portion having a first edge and a second edge; and at least a second non-continuous radial ply, the second radial ply having a right side extending approximately to at least the first bead core and a left side extending approximately to at least the second bead core, wherein at least one of the sidewalls and the carcass crown portion are made of dissimilar material. In a preferred aspect of this embodiment, the material in the crown portion has a lower, the same, or higher material strength than at least one of the sidewalls, wherein the material strength is determined by at least one of the following group comprising: Shore A hardness, compounding, cord diameter, tensile strength, and twists per inch.

In yet another aspect of the present invention the first sidewall, the second sidewall, and the crown portion are all made of dissimilar materials.

In yet a further aspect of the invention, pneumatic tire is disclosed, the tire comprising a carcass; a first radial ply with shoulder portions and lateral edge portions, each of the lateral edge portions being wrapped around a bead core; a first sidewall; a second sidewall; a carcass crown portion, the carcass crown portion having a first edge and a second edge; and at least a second radial ply, wherein the second radial ply is non-continuous, the second radial ply having a right side extending from approximately the first edge of the carcass crown portion, and extending approximately to the first bead core and a left side extending from approximately the second edge of the carcass crown portion, and extending approximately to the second bead core, wherein at least one of the sidewalls and the carcass crown portion are made of dissimilar material.

One advantage of this invention is by utilizing a lesser strength material in the crown of the tire, the cost of the tire can be substantially reduced without compromising performance.

### Brief Description of the Drawings

The invention may take physical form in certain parts and arrangement of parts, embodiments of which will be described in detail in this specification and illustrated in the accompanying drawings which form a part hereof and wherein:
FIGURE 1 is a cross-section of the ply section of a tire showing a mono-ply construction;
FIGURE 2 is a cross-section of the ply-section of a tire, showing belts and the mono-ply construction;
FIGURE 3 is a cross-section of the ply-section of a tire, showing the third radial ply;
FIGURE 4 is a top view of the carcass, showing angles of the plies;
FIGURE 5 is a top view of the carcass, showing angles of the plies;
FIGURE 6 is a top view of the carcass, showing angles of the plies;
FIGURE 7 is a top view of the carcass, showing angles of the plies;
FIGURE 8 is a top view of the carcass, showing angles of the plies
FIGURE 9 is a top view of the carcass, showing angles of the plies; and,

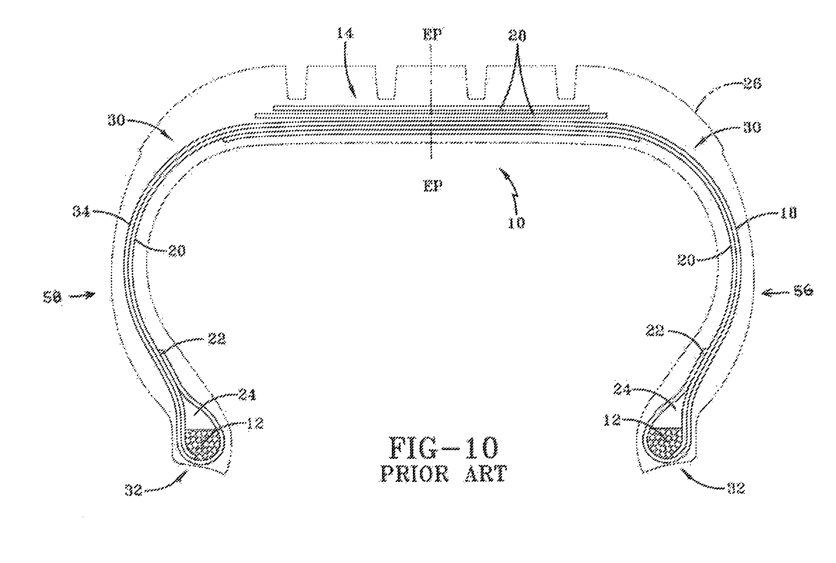

FIGURE 10 is a perspective view of a prior art tire.

### Definitions

The following terms may be used throughout the descriptions presented herein and should generally be given the following meaning unless contradicted or elaborated upon by other descriptions set forth herein.

"Axial" and "axially" mean the lines or directions that are parallel to the axis of rotation of the tire.

"Carcass" means the tire structure apart from the belt structure, tread, undertread, and sidewall rubber over the plies, but including bead cores.

"Carcass crown portion" means the portion of the carcass over which the crown is placed.

"Crown" or "tire crown" means the tread and tread shoulders. The term "crown" may include the immediately adjacent portions of the sidewalls, i.e. the so-called "wings".

"Radial" and "radially" mean directions toward or away from the axis of rotation of the tire.

"Sidewall" means that component which comprises a portion of the outside surface of a tire between the tread and the bead.

### Detailed Description of the Invention

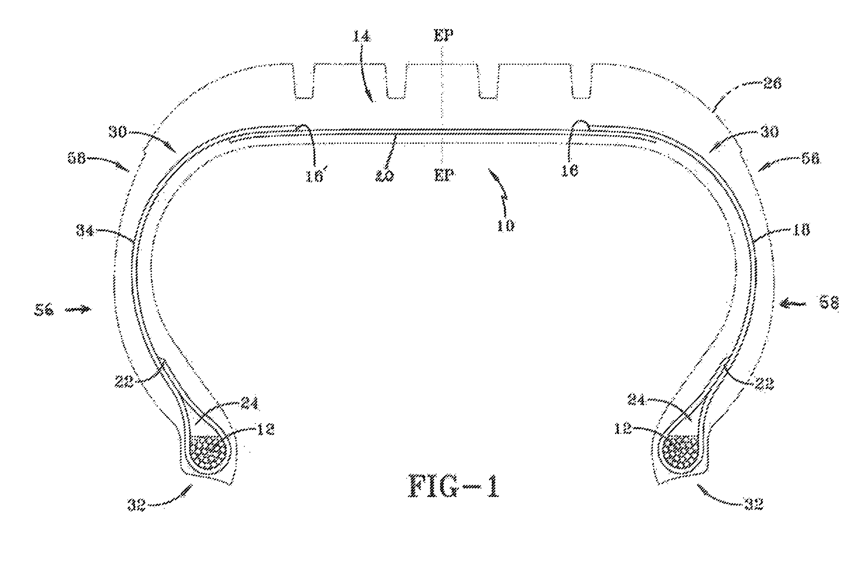

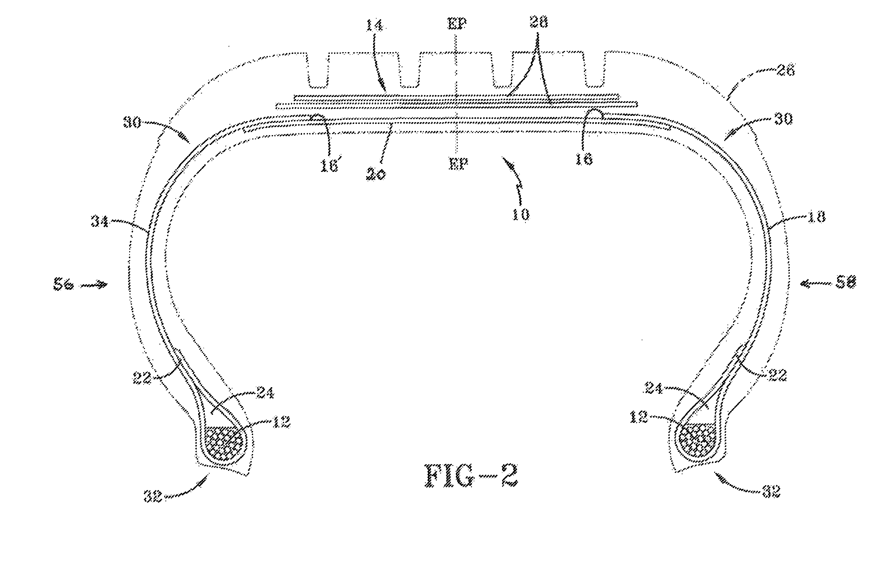

FIGURE 1 shows a tire carcass 10, having two beads 12, sidewalls 56, 58, a carcass crown portion 14 (wherein the carcass crown portion 14 has two edges 16, 16'), a first radial ply 20, a second radial ply having a right side 18 and a left side 34, turn-up ends 22, apexes 24, shoulders 30, and bead regions 32. The bead regions 32 have a pair of axially spaced beads 12 around which are wrapped turn-up ends 22. The apexes 24 are preferably sandwiched between the main body of the carcass 10 and the turn-up ends 22. Radially, outside of the carcass 10 is a tread 26. In FIGURES 2-4, the carcass 10 is shown with belts 28 overlaying the carcass crown portion 14. In one embodiment, at least one of the sidewalls 56, 58 and the crown portion 14 are made of dissimilar materials. In one embodiment, the crown portion 14 is made of a material with lesser strength than the sidewalls 56, 58. It is contemplated within this invention that the sidewalls 56, 58 could be made of a similar material, and the crown portion 14 of a dissimilar material, sidewall 56 being made of a dissimilar material from sidewall 58 and crown portion 14, sidewall 58 being made of a dissimilar material from sidewall 56 and crown portion 14, or sidewall 56, sidewall 58, and crown portion 14 all being made of dissimilar materials. It is also contemplated within this invention that each could have a material with similar, lesser, or higher strength, with material strength being determined by Shore A hardness, compounding, cord diameter, tensile strength, and/or twists per inch.

With continuing reference to FIGURES 1 and 2, the first radial ply 20 is a continuous ply that extends to the beginning of the shoulders 30. The carcass crown portion 14 is defined by the edges 16, 16', and the right side 18 of second radial ply and the left side 34 of the second radial ply begin at the edges 16, 16', and extend around the beads 12 and end in turn-up ends 22. The right and left sides 18, 34 of the second radial ply overlay the first radial ply 20, such that the sidewall region of the carcass 10 is two-ply in this embodiment.

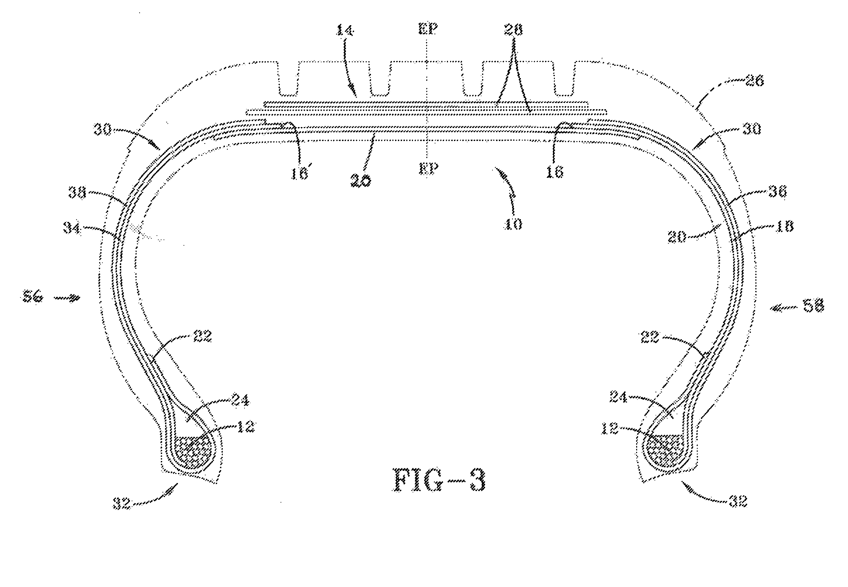

With reference now to FIGURE 3, another embodiment of the invention is shown, wherein the carcass 10 has a third radial ply having a right side 36, which begins at the first edge 16 of the crown carcass portion 14, overlays the right side 18 of the second radial ply, and extends around the bead 12 and end in turn-up end 22. The left side 38 of the third radial ply, which begins at the second edge 16' of the crown carcass portion 14, overlays the left side 34 of the second radial ply, and extends around the bead 12 and end in turn-up end 22. As can be seen in FIGURE 3, in one embodiment, the sides 36, 38 of the third ply overlay the second radial ply in a staggered fashion. The third radial ply is slightly shorter than the second radial ply. The plies are also staggered at the turn-up ends 22 as well.

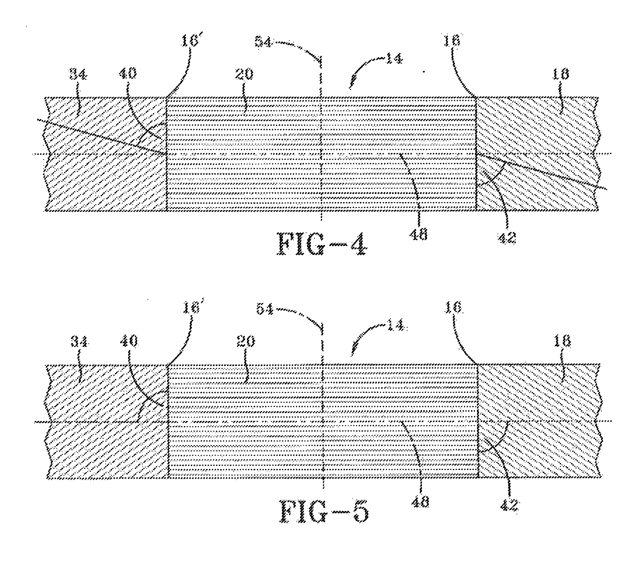

With reference now to FIGURES 4-6, the FIGURES show the tire carcass 10 from the top, showing the angles of the plies. The sides 18, 34 can be at a variety of angles. The rights side 18 has a first edge and the left side 34 has a first edge. A centerline 48 is shown in the FIGURES, and the angles 40, 42 are shown with respect to the centerline 48. In one embodiment, the angles 40, 42 are -75° and 75°, respectively, with respect to the centerline 48. The angles 40, 42 represent the angle of the sides 18, 34. In another embodiment, the angles 40, 42 are both 90°, and in another embodiment, the angles 40, 42 are -105° and 105°, respectively, with respect to the centerline 48. It is to be understood that in this embodiment, angle 40 can be any angle between approximately -75° and approximately -105° and angle 42 can be any angle between approximately 75° and approximately 105°. It is also to be understood that the invention is not intended to be limited by the angles 40, 42, and that any angle can be chosen, as long as chosen using sound engineering judgment. The FIGURES also show a parallel centerline 54.

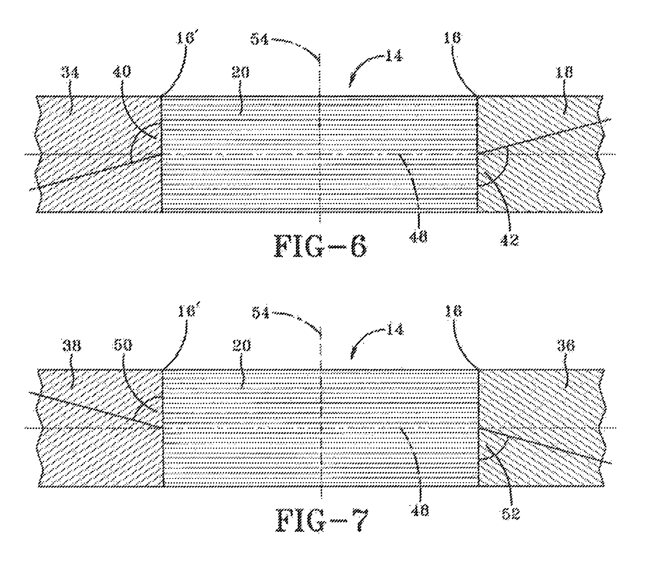

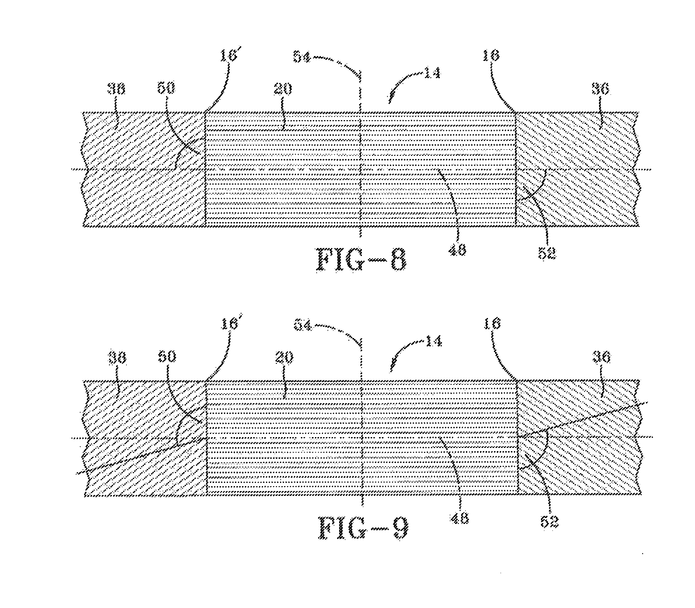

With reference now to FIGURES 7-9, the sides 36, 38 can be at a variety of angles. The right side 36 has a first edge and the left side 38 has a first edge. A centerline 48 is shown in the FIGURES, and the angles 50, 52 are shown with respect to the centerline 48. In one embodiment, the angles 50, 52 are -75° and 75°, respectively, with respect to the centerline 48. The angles 50, 52 represent the angle of the sides 36, 38. In another embodiment, the angles 50, 52 are both 90°, and in another embodiment, the angles 50, 52 are -105° and 105°, respectively, with respect to the centerline 48. It is to be understood that in this embodiment, angle 50 can be any angle between approximately -75° and approximately -105° and angle 52 can be any angle between approximately 75° and approximately 105°. It is also to be understood that the invention is not intended to be limited by the angles 50, 52, and that any angle can be chosen, as long as chosen using sound engineering judgment.

With continuing reference to FIGURES 7-9, in this embodiment, the sides 36, 38 overlay the sides 18, 34. In this embodiment, it is to be understood that angle 40 can be any angle between approximately -75° and approximately -105° and angle 42 can be any angle between approximately 75° and approximately 105°. It is also to be understood that the invention is not intended to be limited by the angles 40, 42, and that any angle can be chosen, as long as chosen using sound engineering judgment. It is also to be understood that the angles 40, 42 can either be the same as the angles 50, 52 or they can be different.

With reference now to FIGURES 1-9, the plies can be made of either similar or dissimilar materials, but the type of material is not intended to be a limitation to this invention, and it is to be understood that the plies could be made of any material chosen using sound engineering judgment.

With continuing reference to FIGURES 1-9, it is to be understood that the plies can be of any length, including extending to the turn-up ends 22, as long as the sides 18, 34 do not connect to each other and sides 36, 38 do not connect to each other. It is also to be understood that the invention is not limited to three plies, but any number of plies could be used, as long as chosen using sound engineering judgment. It is also to be understood that the tire could have two or more continuous plies and two or more non-continuous plies. It is also to be understood that the sides 18, 34 of the second ply and the sides 36, 38 of the third ply, in one embodiment, do not wrap around the bead core 12, but extend to the bead core 12. The sides 18, 34, 36, 38 can extend to the bead core 12, partially around the bead core 12, or all the way around the bead core 12. It is also to be understood that the sides 18, 34, 36, 38 can extend beyond the edges 16, 16' of the carcass crown portion 14. Although in one embodiment, the sides 18, 34, 36, 38 begin at approximately the edge 16, 16', it is to be understood that this invention encompasses the sides 18, 34, 36, 38 extending substantially beyond the edges 16, 16' as long as the second and third plies do not become a continuous ply.

Several embodiments of the invention were tested for the crown portion 14 and the sidewalls 56, 58, wherein the material in the crown portion 14 has an epi (ends per inch) of between 16 and 24 and the material in the sidewalls 56, 58 has an epi of between 24 and 35. In one embodiment, the sidewalls 56, 58 were 1000/2 (1000 decitex linear density/ 2 yarns per ply) polyester with 35 epi. Several embodiments of the crown portion 14 included 1000/2 polyester with 24 epi, 840/2 nylon with 16 epi, and 840/2 nylon with 21 epi. The lesser strength material in the crown portion 14 did not compromise the performance of the tire.

## Claims

1. A tire carcass comprising a first ply (20), a first sidewall (56), a second sidewall (58), a carcass crown portion (14), the carcass crown portion (14) having a first edge (16') and a second edge (16), and a non-continuous second ply (18, 34), the second ply having a right side (18) extending from the carcass crown portion (14) at least to a first bead region (32) and a left side (34) extending from the carcass crown portion (14) at least to a second bead region (32'), **characterised in that** at least one of the sidewalls (56, 58) and the carcass crown portion (14) comprise a dissimilar material.

2. The tire carcass of claim 1 wherein the tire carcass (10) comprises a first shoulder and a second shoulder and wherein first ply (20) extends in the carcass crown portion (14) from the first shoulder (30) to the second shoulder (30) or between the first shoulder (30) and the second shoulder (30).

3. The tire carcass of claim 1 or 2 wherein the right side (18) of the second ply extends over the first edge (16) into the carcass crown portion (14) and wherein the left side (34) of the second ply extends over the second edge (16') into the carcass crown portion (14); and/or wherein the right side (18) of the second ply extends from the first edge (16) or approximately the first edge (16) and the left side (34) of the second ply extends from the second edge (16') or from approximately the second edge (16').

4. The tire carcass of at least one of the previous claims wherein the tire carcass (10) further comprises a non-continuous third ply (36, 38), the third ply having a right side (36) extending from the first edge (16) of the carcass crown portion (14), from approximately the first edge (16) of the carcass crown portion (14), or over the first edge (16) of the carcass crown portion (14) into the carcass crown portion (14) and at least to the first bead region (32), and a left side (38) extending from the second edge (16') of the carcass crown portion (14), approximately the second edge (16') of the carcass crown portion (14), or over the second edge (16') of the carcass crown portion (14) into the carcass crown portion (14) and at least to the second bead region (32'), the third radial ply (36, 38) overlaying the second radial ply (18, 34).

5. The tire carcass of at least one of the previous claims wherein the material in the crown portion (14) has a lower, the same, or higher material strength, preferably a lower material strength, than at least one of the sidewalls (56, 58), wherein the material strength is determined by at least one of the following group comprising Shore A hardness, compounding or rubber composition, cord diameter, tensile strength, cord density, twist direction, and twists per inch.

6. The tire carcass of claim 5 wherein the material for at least one of the sidewalls (56, 58) has an epi (end per inch) between 24 and 35 and the material in the crown portion (14) has an epi between 16 and 24.

7. The tire carcass of at least one of the previous claims wherein the dissimilar materials in at least one of the sidewalls (56, 58) and the carcass crown portion (14) are dissimilar with regard to at least one of the used rubber composition, the used reinforcement material, the cord diameter of the used reinforcement material, the tensile strength of the used reinforcement material, the cord density of the used reinforcement material, the twist direction of the used reinforcement materials, and the twists per inch of the used reinforcement material.

8. The tire carcass of at least one of the previous claims wherein the carcass (10) has a center line (48) perpendicular to the bead cores (12), wherein the right side (18) of the second ply is at an angle (42) of at least approximately 75° or of at least approximately 105° with respect to a line perpendicular to the center line (48), and the left side (34) of the second ply is at an angle (40) of at least approximately - 75° or of at least approximately -105° with respect to a line perpendicular the center line (48).

9. The tire carcass of at least one of the previous claims wherein the carcass (10) has a center line (48) perpendicular to the bead cores (12), wherein the right side (36) of the third ply is at an angle of at least approximately 75° or of at least approximately 105° with respect to a line perpendicular the center line (48), and the left side (38) of the third ply is at an angle of at least approximately -75° or of at least approximately -105° with respect to a line perpendicular to the center line (48).

10. The tire carcass of at least one of the previous claims wherein the carcass (10) has a center line (48) perpendicular to the bead cores (12), wherein the right side (18) of the second ply is at an angle (42) of between 75° and 105° with respect to a line perpendicular to the center line (48), and the left side (34) of the second ply is at an angle (40) of between -75° and -105° with respect to a line perpendicular to the center line (48); and/or wherein the right side (36) of the third ply, if present, is at an angle of between 75° and 105° with respect to a line perpendicular center line (48), and the left side (38) of the third ply, if present, is at an angle of between -75° and -105° with respect to a line perpendicular to the center line (48).

11. The tire carcass of at least one of the claims 8 to 10 wherein the first ply (20) is at a greater angle with respect to a line perpendicular the center line (48) than the angle of the left and right sides of the second and/or third ply.

12. The tire carcass of at least one of the claims 8 to 10 wherein the first ply (20) is at an angle of 90° with respect to a line perpendicular the center line (48).

13. The tire carcass of at least one of the previous claims wherein the right and left sides (18, 34) of the second ply and/or the right and left sides (36, 38) of the third ply each have a width that is in a range of from 40% to 60%, such as approximately 50%, of the width of the first radial ply (20).

14. The tire carcass of at least one of the previous claims wherein the first sidewall (56), the second sidewall (58), and the crown portion (14) are all made of dissimilar materials.

15. A pneumatic tire comprising a tire carcass (10) according to at least one of the previous claims, optionally a belt structure (28), and a tread (26).

## Patentansprüche

1. Reifenkarkasse, umfassend eine erste Lage (20), eine erste Seitenwand (56), eine zweite Seitenwand (58), einen Karkassenzenitteil (14), wobei der Karkassenzenitteil (14) einen ersten Rand (16') und einen zweiten Rand (16) aufweist, und eine nicht-kontinuierliche zweite Lage (18, 34), wobei die zweite Lage eine rechte Seite (18), die sich von dem Karkassenzenitteil (14) mindestens bis zu einem ersten Wulstbereich (32) erstreckt, und eine linke Seite (34), die sich von dem Karkassenzenitteil (14) mindestens bis zu einem zweiten Wulstbereich (32') erstreckt, aufweist, **dadurch gekennzeichnet, dass** eine der Seitenwände (56, 58) und der Karkassenzenitteil (14) ein unterschiedliches Material umfassen.

2. Reifenkarkasse nach Anspruch 1, wobei die Reifenkarkasse (1) eine erste Schulter und eine zweite Schulter umfasst und wobei die erste Lage (20) sich in dem Karkassenzenitteil (14) von der ersten Schulter (30) bis zu der zweiten Schulter (30) oder zwischen der ersten Schulter (30) und der zweiten Schulter (30) erstreckt.

3. Reifenkarkasse nach Anspruch 1 oder 2, wobei die rechte Seite (18) der zweiten Lage sich über den ersten Rand (16) in den Karkassenzenitteil (14) erstreckt und wobei die linke Seite (34) der zweiten Lage sich über den zweiten Rand (16') in den Karkassenzenitteil (14) erstreckt; und/oder wobei die rechte Seite (18) der zweiten Lage sich ab dem ersten Rand (16) oder annähernd dem ersten Rand (16) erstreckt und die linke Seite (34) der zweiten Lage sich ab dem zweiten Rand (16') oder annähernd ab dem zweiten Rand (16') erstreckt.

4. Reifenkarkasse nach mindestens einem der vorgenannten Ansprüche, wobei die Reifenkarkasse (10) weiter eine nicht-kontinuierliche dritte Lage (36, 38) umfasst, wobei die dritte Lage eine rechte Seite (36), die sich ab dem ersten Rand (16) des Karkassenzenitteils (14), annähernd ab dem ersten Rand (16) des Karkassenzenitteils (14), oder über den ersten Rand (16) des Karkassenzenitteils (14) in den Karkassenzenitteil (14) und mindestens bis zu dem ersten Wulstbereich (32) erstreckt, und eine linke Seite (38), die sich ab dem zweiten Rand (16') des Karkassenzenitteils (14), annähernd dem zweiten Rand (16') des Karkassenzenitteils (14), oder über den zweiten Rand (16') des Karkassenzenitteils (14) in den Karkassenzenitteil (14) und mindestens bis zu dem zweiten Wulstbereich (32') erstreckt, aufweist, wobei die dritte radiale Lage (36, 38) über der zweiten radialen Lage (18, 34) liegt.

5. Reifenkarkasse nach mindestens einem der vorgenannten Ansprüche, wobei das Material in dem Zenitteil (14) eine niedrigere, die gleiche oder höhere Materialstärke, bevorzugt eine niedrigere Materialstärke, aufweist als mindestens eine der Seitenwände (56, 58), wobei die Materialstärke bestimmt wird durch mindestens eines aus der folgenden Gruppe, umfassend Shore A-Härte, Misch-oder Kautschukzusammensetzung, Korddurchmesser, Zugfestigkeit, Korddichte, Drallrichtung und Verdrillungen je Zoll.

6. Reifenkarkasse nach Anspruch 5, wobei das Material für mindestens eine der Seitenwände (56, 58) eine EPI-Zahl (Enden je Zoll) zwischen 24 und 35 aufweist und das Material in dem Zenitteil (14) eine EPI-Zahl zwischen 16 und 24 aufweist.

7. Reifenkarkasse nach mindestens einem der vorgenannten Ansprüche, wobei die unterschiedlichen Materialien in mindestens einer der Seitenwände (56, 58) und dem Karkassenzenitteil (14) unterschiedlich sind in Bezug auf mindestens eines der verwendeten Kautschukzusammensetzung, des verwendeten Verstärkungsmaterials, des Korddurchmessers des verwendeten Verstärkungsmaterials, der Zugfestigkeit des verwendeten Verstärkungsmaterials, der Korddichte des verwendeten Verstärkungsmaterials, der Drallrichtung des verwendeten Verstärkungsmaterials und der Verdrillungen je Zoll des verwendeten Verstärkungsmaterials.

8. Reifenkarkasse nach mindestens einem der vorgenannten Ansprüche, wobei die Karkasse (10) eine Mittellinie (48) lotrecht zu den Wulstkernen (12) aufweist, wobei die rechte Seite (18) der zweiten Lage sich in einem Winkel (42) von mindestens annähernd 75° oder von mindestens annähernd 105° in Bezug zu einer Linie lotrecht zur Mittellinie (48) befindet und die linke Seite (34) der zweiten Lage sich in einem Winkel (40) von mindestens annähernd -75° oder von mindestens annähernd -105° in Bezug zu einer Linie lotrecht zur Mittellinie (48) befindet.

9. Reifenkarkasse nach mindestens einem der vorgenannten Ansprüche, wobei die Karkasse (10) eine Mittellinie (48) lotrecht zu den Wulstkernen (12) aufweist, wobei die rechte Seite (36) der dritten Lage sich in einem Winkel von mindestens annähernd 75° oder von mindestens annähernd 105° in Bezug zu einer Linie lotrecht zur Mittellinie (48) befindet und die linke Seite (38) der dritten Lage sich in einem Winkel von mindestens annähernd -75° oder von mindestens annähernd -105° in Bezug zu einer Linie lotrecht zur Mittellinie (48) befindet.

10. Reifenkarkasse nach mindestens einem der vorgenannten Ansprüche, wobei die Karkasse (10) eine Mittellinie (48) lotrecht zu den Wulstkernen (12) aufweist, wobei die rechte Seite (18) der zweiten Lage sich in einem Winkel (42) von zwischen 75° und 105° in Bezug zu einer Linie lotrecht zur Mittellinie (48) befindet und die linke Seite (34) der zweiten Lage sich in einem Winkel (40) von zwischen -75° und -105° in Bezug zu einer Linie lotrecht zur Mittellinie (48) befindet; und/oder wobei die rechte Seite (36) der dritten Lage, falls vorhanden, sich in einem Winkel von zwischen 75° und 105° in Bezug zu einer Linie lotrecht zur Mittellinie (48) befindet und die linke Seite (38) der dritten Lage, falls vorhanden, sich in einem Winkel von -75° und -105° in Bezug zu einer Linie lotrecht zur Mittellinie (48) befindet.

11. Reifenkarkasse nach mindestens einem der Ansprüche 8 bis 10, wobei die erste Lage (20) sich in Bezug zu einer Linie lotrecht zur Mittellinie (48) in einem größeren Winkel befindet als der Winkel der linken und rechten Seite der zweiten und/oder dritten Lage.

12. Reifenkarkasse nach mindestens einem der Ansprüche 8 bis 10, wobei die erste Lage (20) sich in Bezug auf eine Linie lotrecht zur Mittellinie (48) in einem Winkel von 90° befindet.

13. Reifenkarkasse nach mindestens einem der vorgenannten Ansprüche, wobei die rechte und linke Seite (18, 34) der zweiten Lage und/oder die rechte und linke Seite (36, 38) der dritten Lage jede eine Breite aufweisen, die in einem Bereich von 40% bis 60%, wie etwa annähernd 50%, der Breite der ersten radialen Lage (20) liegt.

14. Reifenkarkasse nach mindestens einem der vorgenannten Ansprüche, wobei die erste Seitenwand (56), die zweite Seitenwand (58) und der Zenitteil (14) alle aus unterschiedlichen Materialien hergestellt sind.

15. Luftreifen, umfassend eine Reifenkarkasse (10) nach mindestens einem der vorgenannten Ansprüche, optional eine Gürtelstruktur (28) und eine Lauffläche (26).

## Revendications

1. Carcasse de bandage pneumatique comprenant une première nappe (20), un premier flanc (56), un deuxième flanc (58), une portion de sommet de carcasse (14), la portion de sommet de carcasse (14) possédant un premier bord (16') et un deuxième bord (16), et une deuxième nappe non continue (18, 34), la deuxième nappe possédant un côté droit (18) s'étendant depuis la portion de sommet de carcasse (14) au moins jusqu'à une première zone de talon (32) et un côté gauche (34) s'étendant depuis la portion de sommet de carcasse (14) au moins jusqu'à une deuxième zone de talon (32'), **caractérisée en ce qu'**au moins un des éléments choisi parmi les flancs (56, 58) et la portion de sommet de carcasse (14) comprend une matière dissemblable.

2. Carcasse de bandage pneumatique selon la revendication 1, dans laquelle la carcasse de bandage pneumatique (10) comprend un premier épaulement et un deuxième épaulement, et dans laquelle la première nappe (20) s'étend dans la portion de sommet de carcasse (14) depuis le premier épaulement (30) jusqu'au deuxième épaulement (30) ou bien entre le premier épaulement (30) et le deuxième épaulement (30).

3. Carcasse de bandage pneumatique selon la revendication 1 ou 2, dans laquelle le côté droit (18) de la deuxième nappe s'étend par-dessus le premier bord (16) jusque dans la portion de sommet de carcasse (14), et dans laquelle le côté gauche (34) de la deuxième nappe s'étend par-dessus le deuxième bord (16') jusque dans la portion de sommet de carcasse ; et/ou dans laquelle le côté droit (18) de la deuxième nappe s'étend à partir du premier bord (16) ou approximativement à partir du premier bord (16) et le côté gauche (34) de la deuxième nappe s'étend à partir du deuxième bord (16') ou approximativement à partir du deuxième bord (16').

4. Carcasse de bandage pneumatique selon au moins une des revendications précédentes, dans laquelle la carcasse de bandage pneumatique (10) comprend en outre une troisième nappe non continue (36, 38), la troisième nappe possédant un côté droit (36) s'étendant à partir du premier bord (16) de la portion de sommet de carcasse (14), approximativement à partir du premier bord (16) de la portion de sommet de carcasse (14) ou bien par-dessus le premier bord (16) de la portion de sommet de carcasse (14) jusque dans la portion de sommet de carcasse (14) et au moins jusqu'à la première zone de talon (32), et un côté gauche (38) s'étendant à partir du deuxième bord (16') de la portion de sommet de carcasse (14), approximativement à partir du deuxième bord (16') de la portion de sommet de carcasse (14) ou bien par-dessus le deuxième bord (16') de la portion de sommet de carcasse (14) jusque dans la portion de sommet de carcasse (14) et au moins jusqu'à la deuxième zone de talon (32'), la troisième nappe radiale (36, 38) recouvrant la deuxième nappe radiale (18, 34).

5. Carcasse de bandage pneumatique selon au moins une des revendications précédentes, dans laquelle la matière, dans la portion de sommet (14), possède une résistance des matériaux inférieure, égale ou supérieure, de préférence une résistance des matériaux inférieure à celle d'au moins un des flancs (56, 58), la résistance des matériaux étant déterminée par au moins un élément du groupe suivant comprenant la dureté Shore A, la formulation ou la composition du caoutchouc, le diamètre des câblés, la résistance à la traction, la densité des câblés, la direction de torsion et le nombre de torsions par pouce.

6. Carcasse de bandage pneumatique selon la revendication 5, dans laquelle la matière, pour au moins un des flancs (56, 58), possède une valeur epi (bout par pouce) entre 24 et 35 et la matière dans la portion de sommet (14) possède une valeur epi entre 16 et 24.

7. Carcasse de bandage pneumatique selon au moins une des revendications précédentes, dans laquelle les matières dissemblables dans au moins un élément choisi parmi les flancs 56 58 et la portion de sommet de carcasse 14 sont dissemblables en ce qui concerne au moins un élément choisi parmi la composition de caoutchouc utilisée, la matière de renforcement utilisée, le diamètre des câblés de la matière de renforcement utilisée, la résistance à la traction de la matière de renforcement utilisée, la densité des câblés de la matière de renforcement utilisée, la direction de torsion de la matière de renforcement utilisée et le nombre de torsions par pouce de la matière de renforcement utilisée.

8. Carcasse de bandage pneumatique selon au moins une des revendications précédentes, dans laquelle la carcasse (10) possède une ligne médiane (48) s'étendant perpendiculairement aux tringles de talons (10), le côté droit (18) de la deuxième nappe formant un angle (42) d'au moins approximativement 75° ou d'au moins approximativement 105° par rapport à une ligne perpendiculaire à la ligne médiane (48), et le côté gauche (34) de la deuxième nappe formant un angle (40) d'au moins approximativement -75° ou d'au moins approximativement -105° par rapport à une ligne perpendiculaire à la ligne médiane (48).

9. Carcasse de bandage pneumatique selon au moins une des revendications précédentes, dans laquelle la carcasse (10) possède une ligne médiane (48) perpendiculaire aux tringles de talons (12), le côté droit (36) de la troisième nappe formant un angle d'au moins approximativement 75° ou d'au moins approximativement 105° par rapport à une ligne perpendiculaire à la ligne médiane (48), et le côté gauche (38) de la troisième nappe formant un angle d'au moins approximativement -75° ou d'au moins approximativement -105° par rapport à une ligne perpendiculaire à la ligne médiane (48).

10. Carcasse de bandage pneumatique selon au moins une des revendications précédentes, dans laquelle la carcasse (10) possède une ligne médiane (48) perpendiculaire aux tringles de talons (12), le côté droit (18) de la deuxième nappe formant un angle (42) entre 75° et 105° par rapport à une ligne perpendiculaire à la ligne médiane (48), et le côté gauche (34) de la deuxième nappe formant un angle (40) entre -75° et -105° par rapport à une ligne perpendiculaire à la ligne médiane (48) ; et/ou dans laquelle le côté droit (36) de la troisième nappe, lorsqu'elle est présente, forme un angle entre 75° et 105° par rapport à une ligne perpendiculaire à la ligne médiane (48), et le côté gauche (38) de la troisième nappe, lorsqu'elle est présente, forme un angle entre - 75° et -105° par rapport à une ligne perpendiculaire à la ligne médiane (48).

11. Carcasse de bandage pneumatique selon au moins une des revendications 8 à 10, dans laquelle la première nappe (20) forme un angle, par rapport à une ligne perpendiculaire à la ligne médiane (48), qui est supérieur à l'angle formé par les côtés gauche et droit de la deuxième et/ou de la troisième nappe.

12. Carcasse de bandage pneumatique selon au moins une des revendications 8 à 10, dans laquelle la première nappe (20) forme un angle de 90° par rapport à une ligne perpendiculaire à la ligne médiane (48).

13. Carcasse de bandage pneumatique selon au moins une des revendications précédentes, dans laquelle les côtés droit et gauche (18, 34) de la deuxième nappe et/ou les côtés droit et gauche (36, 38) de la troisième nappe possèdent chacun une largeur qui se situe dans la plage de 40 % à 60 %, par exemple d'approximativement 50 %, de la largeur de la première nappe radiale (20).

14. Carcasse de bandage pneumatique selon au moins une des revendications précédentes, dans laquelle le premier flanc (56), le deuxième flanc (58) et la portion de sommet (14) sont tous réalisés à partir de matières dissemblables.

15. Bandage pneumatique comprenant une carcasse de bandage pneumatique (10) selon au moins une des revendications précédentes, de manière facultative une structure de ceintures (28), et une bande de roulement (26) .
